# EUROPEAN PATENT APPLICATION

(11) **EP 1 840 759 A1**
(43) Date of publication of application: **03.10.2007**
(21) Application number: 07101221.5
(22) Date of filing: 26.01.2007
(51) Int. Cl.: G06F 17/24

(54) **Printing method**

(30) Priority: 31.03.2006 EP 06112085
(71) Applicant: Agfa HealthCare NV, 2640 Mortsel (BE)
(72) Inventor: Vincent, Leon AGFA-GEVAERT, 2640, Mortsel (BE); Hellemans, Patrick AGFA-GEVAERT, 2640, Mortsel (BE)
(74) Representative: Theunis, Patrick

(57) **Abstract**

A printing method wherein a lay out composition for a print sheet is defined as a hierarchical set of cells, independent of characteristics of a printing device.

A printing model is generated for at least one image to be printed and/or associated annotation data by means of this lay out composition and links to data files. The printing model is converted into a bit map representation taking into account the printing characteristics of the printing device.

## Description

### FIELD OF THE INVENTION

The present invention relates to a printing method, more specifically to the specification of the lay out of a sheet to be printed.

### BACKGROUND OF THE INVENTION

In existing systems the lay-out of a reproduction, typically comprising one or more diagnostic images with associated annotations, is based on the use of pre-defined templates. A template consists of a description of a composition in which the position and the dimensions of each image as well as the associated position of annotations are defined. Commonly such templates are stored in the memory of an output device such as a hard copy printer.

A major problem of this mode of operation is that the system is very rigid because the number of lay-outs of a reproduction and the configuration of the lay-outs is limited to the number and configuration of the standard, pre-defined templates which are stored in the output device. Examples of such lay-outs are: one image combined with one text window, two images of equal dimensions on a single reproduction etc.

In an alternative state of the art mode of operation the lay-out is composed in a work station and the image with the associated lay-out is transferred, via the DICOM protocol, as a single image to the reproduction device.
A disadvantage of this method is that the work station needs to be in possession of the characteristics of the reproducing device, e.g. the printer. This mode of operation demands a lot of storage capacity and entrusts the work station with part of the job of the reproduction device.

It is an object to provide a printing method that overcomes the above-mentioned problems of the prior art modes of operation.

### SUMMARY OF THE INVENTION

The above-mentioned objects are achieved by a printing method as set out in claim 1.

The method of this invention differs from the prior art in that instead of using pre-defined templates, the composition of a print sheet is now described by a model which is independent of the specific characteristics of the reproducing device.
This model is then converted into a bit map representation taking into account the specific characteristics of the reproducing device such as resolution, pixel characteristics etc. This conversion of a high-level model into a graphical image, represented by a bit map, is also called 'graphical rendering'.

In the context of the present invention the term "print sheet" refers to a graphically rendered single sheet of film or paper comprising at least one image and optional annotations. A print sheet is generated for output on a hard copy printer (film-based or paper-based).

A "sheet layout" is an abstract representation defining all presentation aspects of the print sheet. It comprises placeholders for the various individual elements that define the print sheet.

An "annotation" refers to textual or symbolic data relating to the images on the print sheet.

"DICOM printing" refers to generating a hard copy output of the print sheet on a DICOM compatible (networked) printer device.

"Sheet composing" refers to the process of creating and manipulating "sheets" by assigning actual entities to image and annotation placeholders and attributes.

Specific features for preferred embodiments of the invention are set out in the dependent claims.

Further advantages and embodiments of the present invention will become apparent from the following description and drawings.

### BRIEF DESCRIPTION OF THE DRAWINGS

Fig. 1 shows a cell,
Fig. 2 is an UML class diagram,
Fig. 3 is an example of a reproduction,
Fig. 4 is a representation of the composition of the example of fig.3,
Fig. 5 illustrates the workflow according to the present invention.

### DETAILED DESCRIPTION OF THE INVENTION

The composition of a print sheet is described in a so-called sheet model. This model describes the content and the geometry of a reproduction in a way that is independent from the reproducing device.
In this way graphical representations of the same model can be optimally generated for reproducing devices with diverging technical characteristics.

The concepts onto which the sheet models is based are described below. They are based on the theory of object oriented modeling and its design patterns.

A sheet composition is described as a hierarchical structure of different types of cells such as a simple cell, a composed cell etc.

A cell is a closed surface (a rectangular area) defined within the surface of one parent cell. The position and dimensions of the cell are defined relative to a parent cell.

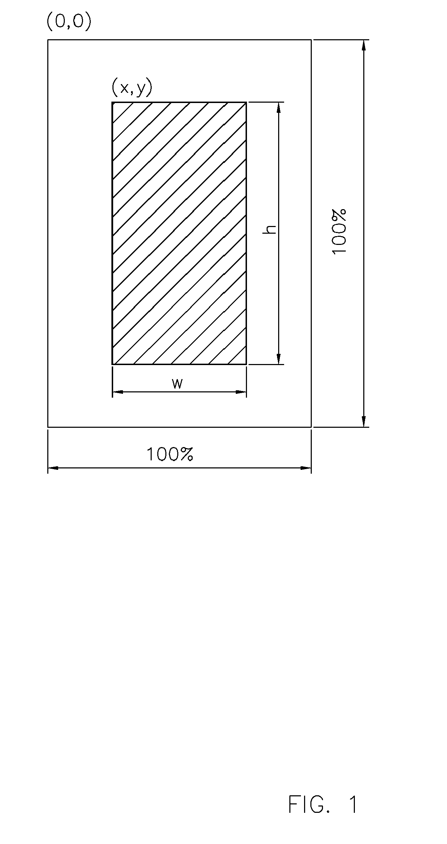

In the example of figure 1 a cell is shown with origin (x,y), width w and height h.
x, y, w and h are defined relative to the dimensions of the parent cell: x=y=0.25; w=h=0.50.

The content of a cell may be different depending on the type of the cell. This fact is modeled through the introduction of so-called sub-cells. Examples of sub-cells are described below.

In the particular application of medical imaging, image cells are cells the content of which is a representation of a diagnostic image. Attributes describe how the image can be optimally represented within the constraints of the cell (scales, image processing etc.).

Text cells are cells the content of which is text. Additional attributes are text, aligning of text within the cell, font-type, color etc.

Other types of cells may be required to represent the complex composition of a film in a realistic way. However, these types can always be designed according to the following principles.

* A simple cell is a cell that has no children. In the medical imaging application, this cell type can used to represent diagnostic images that are to be reproduced as a whole.

* Composite cells are cells that have zero or more children. These composite cells cluster a number of child cells within their surface. These child cells can in turn be composite cells so that a so-called composite pattern is obtained.

The purpose of the notion composite cell is to cluster other cells. A composite cell does not have a corresponding visual representation. It is a structure element which can be used in the composition of a sheet model to manipulate groups of cells as a single unit.

The above definition of a cell is given in a recursive way: a cell is defined with reference to its parent cell. This recursion ends in a parent-less cell. A model cell is characterized by the fact that is parentless and of composite type.

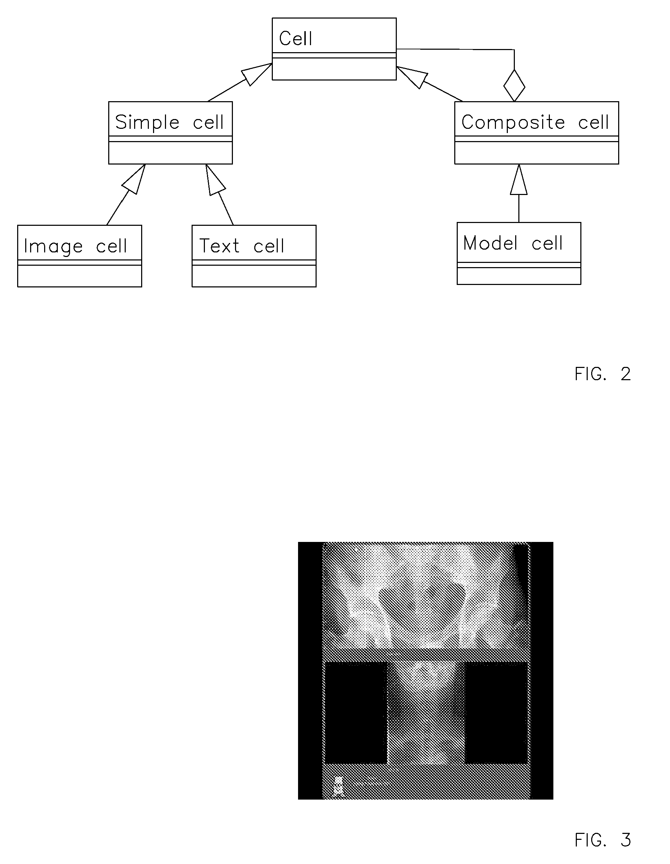

Figure 2 illustrates the hierarchy of cell types by means of a UML class diagram.

Figure 3 is an example of a film composition for a medical reproduction.
The film composition of this example consists of two diagnostic images each having a text box (a collection of related text cells). At the bottom of the film a third text cell is provided.

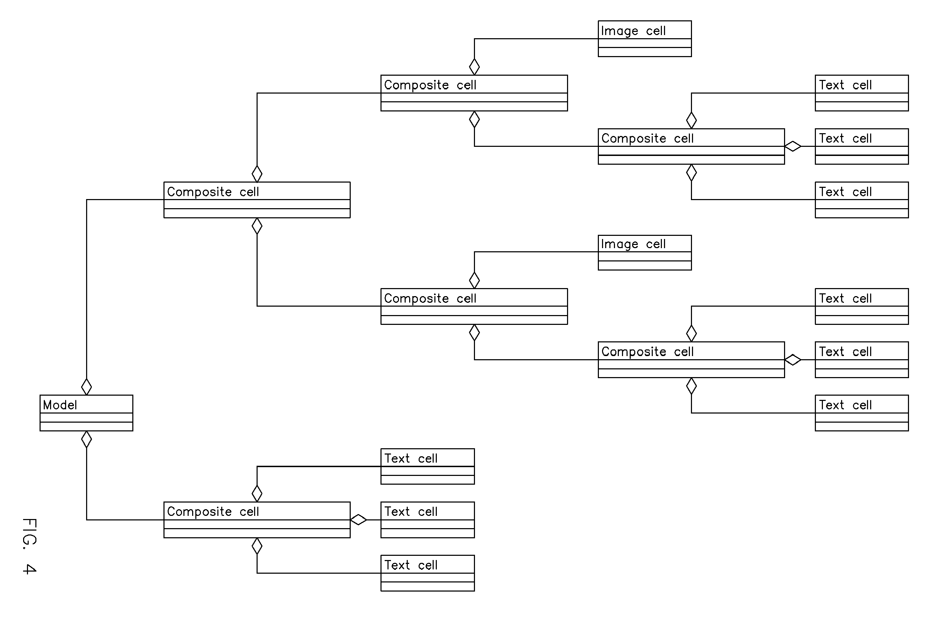

The composition of this film can be represented by means of a structure of cells as shown in figure 4.
The root of this representation is an object of the model type. It comprises two child cells of composite type. The first of these composite cells comprises both images with their corresponding text boxes, the second one describes the text box which is provided at the bottom of the film. The three text boxes are composite cells having a number of text cells as children.

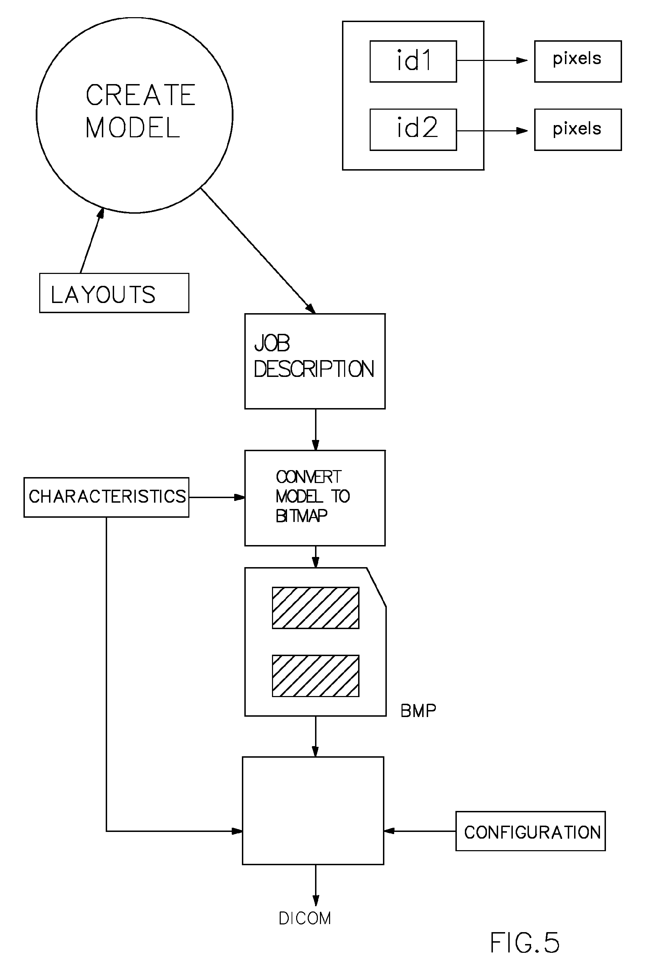

Figure 5 illustrates the method of the present invention.

A lay out composition for a reproduction, e.g. a print sheet is retrieved from memory. The lay out composition is defined as a hierarchical set of components (cells, sub-cells, composite cells ...) as described higher. The definition is hierarchical and independent of the characteristics of the reproducing device.

Next a printing model is generated for at least one image (and annotation data). The printing model is generated by means of the retrieved lay out composition and has links for each part of the lay out composition to data files comprising the image data and/or the annotation data to be printed in the cells of the retrieved lay out composition.
Next the printing model is converted into a bit map representation to be applied to a printer taking into account the printing characteristics of the printer. These characteristics are for example number of bits per pixel (8, 12, 16), dimensions of reproducing material, configuration details (minimum and maximum reproducing density) etc.
The conversion is such that the relative definition of the cells is converted into an absolute definition of dimensions and the content of the cells adapted to the above described characteristics of the printing device.
Finally the bit map is applied (e.g. taking into account DICOM printing requirements) to the printing device.

Having described in detail preferred embodiments of the current invention, it will now be apparent to those skilled in the art that numerous modifications can be made therein without departing from the scope of the invention as defined in the appending claims.

## Claims

1. A printing method comprising the steps of
- retrieving a lay out composition for a print sheet from memory, said lay out composition being defined as a hierarchical structure of cells, the position and dimensions of a cell being hierarchically defined relative to a parent cell, independent of characteristics of a printing device,
- composing a printing model for at least one image and/or associated data to be printed by means of said lay out composition and links to data files comprising said image or data to be printed,
- converting said printing model into a bit map representation to be applied to said reproducing device taking into account printing characteristics of said reproducing device.
